# EUROPÄISCHE PATENTSCHRIFT

(11) **EP 1 817 152 B1**
(45) Veröffentlichungstag und Bekanntmachung des Hinweises auf die Patenterteilung: **03.12.2008**
(21) Anmeldenummer: 05801358.2
(22) Anmeldetag: 14.10.2005
(51) Int. Cl.: B29C 45/56, B29C 45/00, B29K 105/06

(54) **VERFAHREN ZUR HERSTELLUNG VON LANGFASERVERSTÄRKTEN KUNSTSTOFFFORMTEILEN**
METHOD FOR PRODUCING CONTINUOUS STRAND-REINFORCED PLASTIC SHAPED PARTS
PROCEDE DE FABRICATION DE PIECES MOULEES EN MATIERE PLASTIQUE RENFORCEE PAR DES FIBRES LONGUES

(30) Priorität: 20.10.2004 DE 102004051250
(43) Veröffentlichungstag der Anmeldung: 15.08.2007
(73) Patentinhaber: Demag Ergotech GmbH, 90571 Schwaig (DE)
(72) Erfinder: JAEGER, Ansgar, 91207 Lauf (DE); PAHLKE, Sabine, 67067 Ludwigshafen (DE)
(74) Vertreter: Rau, Manfred
(86) Internationale Anmeldenummer: PCT/EP2005/055255
(87) Internationale Veröffentlichungsnummer: WO 2006/042824

(56) Entgegenhaltungen:
- EP-A- 0 477 967
- EP-A- 0 999 023
- WO-A-00/16958
- WO-A-98/10417
- DE-A1- 10 219 020
- DE-A1- 19 913 525
- US-A- 4 489 033
- US-A- 6 010 656
- US-A1- 2003 098 525
- US-A1- 2003 164 564
- PATENT ABSTRACTS OF JAPAN Bd. 2000, Nr. 06, 22. September 2000 (2000-09-22) -& JP 2000 084982 A (MITSUI CHEMICALS INC), 28. März 2000 (2000-03-28) -& DATABASE WPI Section Ch, Week 200026 Derwent Publications Ltd., London, GB; Class A32, AN 2000-297344 XP002362107 & JP 2000 084982 A (MITSUI CHEM INC) 28. März 2000 (2000-03-28)

## Beschreibung

Die Erfindung betrifft ein Verfahren zum Herstellen von Kunststoffformteilen aus langfaserverstärkten Thermoplasten, nachfolgend LFT-Kunststoffformteil genannt, durch Einspritzen einer langfaserverstärkten Thermoplast-Schmelze, nachfolgend LFT-Schmelze genannt.

Wird langfaserverstärkte Schmelze im üblichen Spritzgießprozess verarbeitet, so werden beim Einspritzen in das Werkzeug die Fasern einer starken Scherung ausgesetzt. Aufgrund der Scherung werden die Fasern gekürzt, so dass es zu Einbußen bei den mechanischen Eigenschaften kommt (längere Fasern führen stets zu besseren mechanischen Eigenschaften, wenn die Fasern gut mit Schmelze benetzt sind).

Zur Vermeidung dieser Problematik ist es bekannt, die LFT-Schmelze in ein Werkzeug mit vorvergrößerter Wanddicke bzw. in eine vorvergrößerte Kavität einzuspritzen (d.h. es wird ein größere Fließspalt zur Verfügung gestellt) und erst nach dem Einfüllen der gesamten LFT-Schmelze das Werkzeug in einem Prägevorgang vollständig zu schließen und die Schließeinheit zu verriegeln. Neben der genannten Wirkung auf die Faserlängen kann durch eine derartige Prägefunktion auch ein geringerer Verzug der Bauteile erreicht werden. Zudem sinken der Spritzdruck und insbesondere der Werkzeuginnendruck und damit der Schließkraftbedarf des Bauteils (dies ist insbesondere bei großen und flächigen Bauteilen von Vorteil).

Nachteilig bei diesem, auch als sequentielles Prägen bezeichneten Prinzip ist, dass sich zum Beginn des Einspritzens in die vorvergrößerte Kavität ein Freistrahl bildet, der zu Markierungen am LFT-Kunststoffformteil führt. Eine weitere Markierung ergibt sich durch die Größe des Schmelzekuchens, der entsteht, wenn die LFT-Schmelze in das auf einen vorgegebenen Prägespalt geöffnete Werkzeug eingespritzt wird. Dieser Schmelzekuchen bleibt kurzfristig stehen und die LFT-Schmelzefront friert ein, bevor das Werkzeug geschlossen wird, d.h. bevor das Prägen beginnt.

Aus der JP-A-2000 084982 ist es bekannt, eine faserbeladene Schmelze in eine vorverkleinerte Kavität einzuspritzen und die Kavität bei weiterem Einspritzen auf die endgültige Formteilkavität aufzufahren, wobei nachfolgend die Schmelze gekühlt wird und sich verfestigen kann. Die US-A-4489033 offenbart ein Verfahren zum Spritzprägen von Kunstsoffformteilen, wobei die Kunststoffschmelze mit verschiedenen Zusatzstoffen versetzt wird; eine langfaserverstärkte Kunststoffschmelze wird jedoch nicht verarbeitet.

Ausgehend hiervon liegt der Erfindung die Aufgabe zugrunde, ein Verfahren anzugeben, mit dem LFT-Kunststoffformteile hergestellt werden können, ohne dass Markierungen auftreten und ohne dass die Fasern einer starken Scherbelastung ausgesetzt sind.

Die Lösung dieser Aufgabe erfolgt durch Verfahren mit den Merkmalen von Anspruch 1 und 3. Vorteilhafte Weiterentwicklungen und Ausgestaltungen finden sich in den Unteransprüchen.

Dadurch, dass das Einspritzen der LFT-Schmelze parallel zum Öffnen des Formwerkzeugs erfolgt, wird eine Freistrahlbildung vermieden und die Fasern werden keiner oder nur einer geringen Scherbelastung ausgesetzt, so dass ein Faserbruch weitgehend vermieden wird. Außerdem wird das Entstehen von Oberflächenmarkierungen vermieden. Das Öffnen des Formwerkzeugs und der Start des Einspritzens können im Wesentlichen zeitgleich erfolgen. Bedarfsweise kann mit dem Einspritzen auch während des Zufahrens begonnen werden, wenn das Formwerkzeug eine vorgebbare Position erreicht hat, z.B. kurz bevor es geschlossen ist und sich die Werkzeugplatten der Formwerkzeuge berühren. Vorteilhaft ist es, wenn - ausgehend von der Prägeposition - das Zufahren des Formwerkzeugs gestartet wird, solange das Einspritzen der LFT-Schmelze noch nicht beendet ist.

Da stets eine "Relativbewegung" zwischen dem LFT-Schmelzekuchen und dem Formwerkzeug erfolgt, sei es durch fortgesetztes Einspritzen bei Stillstand des Formwerkzeugs oder Bewegung des Formwerkzeugs (während oder nach Beendigung des Einspritzens), kommt es zu keiner Zeit zu einem Stillstand des LFT-Schmelzekuchens. Dadurch kann es auch nicht zum Einfrieren der Schmelzefront kommen, was die Ausbildung von Oberflächenmarkierungen zur Folge hätte.

Dadurch, dass die Formwerkzeuge zunächst bis auf Plattenberührung zusammengefahren werden, kann die Schließeinheit exakt positioniert werden und das Formwerkzeug kann in den gewünschten Zustand gebracht werden. Beispielsweise können Kerne oder Schieber in ihre Position gebracht werden. Falls zudem auch Dekormaterial (Textilen, Folien, oder ähnliches) hinterspritzt werden soll, wird das Dekormaterial beim Zufahren des Formwerkzeugs in vorteilhafter Weise vorgeformt. Das anfängliche Zufahren des Formwerkzeugs hat den weiteren Vorteil, dass gewährleistet ist, dass sich kein LFT-Formteil mehr aus dem vorangegangenen Zyklus oder ein Fremkörper im Formwerkzeug befinden.

In vorteilhafter Weise können der Start des Öffnens und/oder der Start des Zufahrens des Formwerkzeugs in Abhängigkeit von der Position der Schnecke ausgelöst werden. Weitere Möglichkeiten, diese Bewegungen zu starten, sind: Start abhängig vom Werkzeuginnendruck, abhängig von der Zeit oder abhängig vom Spritzdruck. Durch diese Möglichkeiten, den Prägeablauf zu programmieren, ergibt sich eine größere Flexibilität bei der Gestaltung des Prägevorgangs zum Erreichen einer guten Oberflächenqualität.

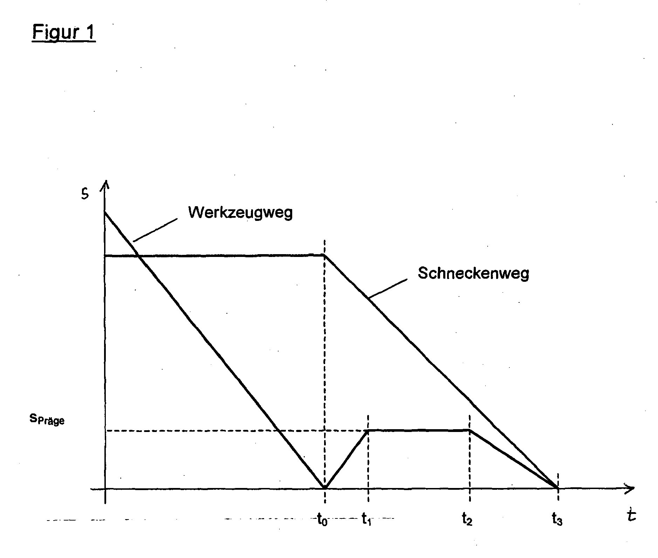

Nachfolgend soll die Erfindung unter Bezugnahme auf die Figur 1 näher beschrieben werden. In dieser Figur sind über die Zeit t der Weg bzw. die Position des Formwerkzeugs und der Schneckenweg aufgetragen. Des weiteren ist ein Prägespalt S_{präge} als horizontale gestrichelte Linie markiert.

Zu Beginn des Spritzprägezyklus ist das Formwerkzeug geöffnet und die Schnecke befindet sich in einer Position, in der mindestens das Schussvolumen an LFT-Schmelze für diesen Spritzprägezyklus bereitgehalten wird. Nun kann das Formwerkzeug bis zur Plattenberührung der Formwerkzeughälften zugefahren werden, beispielsweise mittels geeigneter Verfahrzylinder. Wenn das Formwerkzeug bis auf die endgültige Größe der Kavität zugefahren ist (t₀) (d.h. keine vergrößerte oder verkleinerte Kavität gegenüber der endgültigen Kavität), wird die Schnecke nach vorne bewegt (abfallenden Schneckenweg) und die LFT-Schmelze in das Formwerkzeug eingespritzt. Zeitgleich wird das Formwerkzeug aufgefahren, bis es zur Zeit t₁ den Prägespalt erreicht hat. In dieser Position kann es eine vorbestimmte Zeit gehalten werden, beispielsweise von t₁ bis t₂, während der die Schnecke weiter nach vorne verfahren und der Einspritzvorgang fortgesetzt wird. Ab der Zeit t₂ wird das Formwerkzeug zugefahren, bis es zu einer Zeit t₃ wieder geschlossen ist und die Kavität ihre endgültige Größe erreicht hat. Das Einspritzen von LFT-Schmelze kann zum Zeitpunkt t₃ beendet werden, wie in Figur 1 dargestellt, oder zu einem früheren Zeitpunkt (t_{STOPP} zwischen t₁ und t₂ oder zwischen t₂ und t₃). Gegebenenfalls kann das Einspritzen auch noch eine kurze Zeit fortgesetzt werden, wenn das Formwerkzeug schon geschlossen ist (t_{STOPP} größer als t₃).

Das Verfahren kann auf jeder Spritzgießmaschine ausgeführt werden, die für ein Spritzprägeverfahren ausgelegt ist und die über eine diesbezügliche Maschinensteuerung verfügt. Die Spritzgießmaschine kann so ausgelegt sein, dass das Auffahren des Formwerkzeugs allein durch die eingespritzte LFT-.Schmelze erfolgt, d.h. die Mittel zum Verfahren und Zuhalten des Formwerkzeugs sind "neutral" geschaltet. Gegebenenfalls, können die Verfahrmittel wie beispielsweise Verfahrzylinder benutzt werden, um eine kontrollierte Gegenkraft zu erzeugen, die das Auffahren des Formwerkzeugs in gewünschter Weise bremsen kann. Es ist aber auch möglich, mittels der Verfahrmittel das Auffahren des Formwerkzeugs aktiv zu unterstützen.

Des weiteren kann das Formwerkzeug federbelastete Schieber oder Kerne aufweisen, wobei die Federkraft je nach Wunsch in Richtung des Auffahrens unterstützend oder in Richtung des Zufahrens unterstützend wirkt. Im ersten Fall wirkt die zuvor erwähnte Gegenkraft gegen die Federkraft. Im letzteren Fall wirkt die von der LFT-Schmelze erzeugte Auftreibkraft der Federkraft entgegen. Die Federkraft kann so eingestellt werden und/oder es können Anschläge für die Federn vorgesehen werden, dass eine Bewegung bis zu der Prägeposition oder ausgehend von dieser weg erfolgen kann.

Bei der Verarbeitung von langfaserverstärkten Thermoplasten ist im übrigen Folgendes zu berücksichtigen. Bei der Auslegung der Spritzgießmaschine selbst ist darauf zu achten, dass keine oder nur eine geringe Scherbelastung auftritt, d.h. dass zum Beispiel Schnecke, Rückströmsperre und Düse entsprechend auszulegen sind, insbesondere sollte die Schnecke ein großes L/D-Verhältnis aufweisen. Bei den Maschinenparametern ist darauf zu achten, dass möglichst eine geringe Spritzgeschwindigkeit, ein geringer Nachdruck, eine geringe Drehzahl der Schnecke und ein geringer Staudruck vorliegen; außerdem sollten die Temperaturen im Plastifizierzylinder individuell angepasst sein (z.B. höhere Temperatur in der Einzugszone); z.T. empfiehlt sich eine Vorwärmung des Granulats (wirkt sich Durchsatzerhöhend aus). Beim Formwerkzeug und im Angusssystem ist auf große Fließquerschnitte und wenige Schmelzeumlenkungen zu achten sowie die geringe Schwindung und der geringe Verzug zu berücksichtigen.

Als Fasermaterial können beispielsweise Glasfasern, Kohlefasern, Aramidfasern oder auch Naturfasern verwendet werden. Der Großteil der Anwendungen nutzt jedoch Glasfasern.

Mögliche Anwendungen sind vor allem im Automobil zu finden. Die Anwendungen reichen von relativ kleinen Bauteilen, wie z.B. einem Pedalmodul, bis zu sehr großen Bauteilen, wie z.B. Unterbodenverkleidungen.

Das beschriebene Spritzprägeverfahren kann sein volles Potenzial insbesondere bei großflächigen Bauteilen zeigen. Zu diesen Anwendungen im Automobil zählen die genannten Unterbodenverkleidungen, aber auch Instrumententafelträger oder Sitzstrukturen (z.B. Rückenlehne der Rückbank).

Untersuchungen an einer Unterbodenverkleidung konnten z.B. belegen, dass die Bauteile neben einem deutlich reduzierten Verzug auch sehr gute mechanische Kennwerte aufwiesen und mit stark reduzierter Schließkraft gefertigt werden konnten. Dies führt für den Anwender zu signifikanten qualitativen und wirtschaftlichen Vorteilen: Der geringe Verzug ermöglicht einen passgenauen Einbau der Unterbodenverkleidung mit entsprechendem Nutzen für einen guten c_{W}-Wert und damit geringerem Kraftstoffverbrauch des Autos. Die reduzierte Schließkraft bietet dem Anwender die Möglichkeit, die Bauteile auf einer kleineren Maschine zu fertigen und damit noch wirtschaftlicher zu produzieren. Die guten mechanischen Kennwerte können schließlich dazu genutzt werden, den Glasfasergehalt im Material zu senken und/oder die Wandstärke der Bauteile zu reduzieren. Dies hat zum einen geringere Materialkosten, aber auch kürzere Zykluszeiten und im Endprodukt ein geringeres Gewicht zur Folge (wiederum mit dem Nutzen eines geringeren Kraftstoffverbrauch des Autos).

## Patentansprüche

1. Verfahren zum Herstellen von langfaserverstärkten Kunststoffformteilen (LFT-Formteilen) auf einer Spritzgießmaschine, wobei eine langfaserverstärkte Schmelze (LFT-Schmelze) bereitgestellt und in ein Formwerkzeug eingespritzt wird,
**gekennzeichnet durch** folgende Verfahrensschritte:
(a) Zufahren des Formwerkzeugs bis auf die endgültige Größe der Kavität,
(b) Start Einspritzen der LFT-Schmelze und Auffahren des Formwerkzeugs, bis ein vorgebbarer Prägespalt erreicht ist,
(c) Fortgesetztes Einspritzen der LFT-Schmelze,
(d) Zufahren des Formwerkzeugs,
(e) Abkühlenlassen des LFT-Formteils,
(f) Öffnen des Formwerkzeugs, und
(g) Entnahme des LFT-Formteils.

2. Verfahren nach Anspruch 1,
**dadurch gekennzeichnet,**
das im Schritt (b) das Einspritzen und das Auffahren im wesentlichen zeitgleich beginnen.

3. Verfahren zum Herstellen von langfaserverstärkten Kunststoffformteilen (LFT-Formteilen) auf einer Spritzgießmaschine, wobei eine langfaserverstärkte Schmelze (LFT-Schmelze) bereitgestellt und in ein Formwerkzeug eingespritzt wird,
**gekennzeichnet durch** folgende Verfahrensschritte:
(a) Zufahren des Formwerkzeugs bis auf die endgültige Größe der Kavität,
(b) Start Einspritzen der LFT-Schmelze bei einer vorgebbaren Position des Formwerkzeugs während des Zufahrens, bevor das Formwerkzeug geschlossen ist,
(c) Fortsetzen des Einspritzens und Auffahren des Formwerkzeugs, bis ein vorgebbarer Prägespalt erreicht ist,
(d) Fortgesetztes Einspritzen der LFT-Schmelze,
(e) Zufahren des Formwerkzeugs,
(f) Abkühlenlassen des LFT-Formteils,
(g) Öffnen des Formwerkzeugs, und
(h) Entnahme des LFT-Formteils.

4. Verfahren nach Anspruch 3,
**dadurch gekennzeichnet,**
**dass** das Formwerkzeug zunächst vollständig zugefahren wird, bevor es wieder aufgefahren wird.

5. Verfahren nach einem der Ansprüche 1 bis 4,
**dadurch gekennzeichnet,**
**dass** das Zufahren des Formwerkzeugs gestartet wird, nachdem das Einspritzen der LFT-Schmelze beendet ist.

6. Verfahren nach einem der Ansprüche 1 bis 4,
**dadurch gekennzeichnet,**
**dass** das Zufahren des Formwerkzeugs gestartet wird, wenn das Einspritzen der LFT-Schmelze noch nicht beendet ist.

7. Verfahren nach Anspruch 6,
**dadurch gekennzeichnet,**
**dass** das Einspritzen der LFT-Schmelze beendet wird, nachdem das Formwerkzeug zugefahren ist.

8. Verfahren nach einem der Ansprüche 1 bis 7,
**dadurch gekennzeichnet,**
**dass** das Formwerkzeug bei Erreichen des Prägespalts eine vorgebbare Zeit in dieser Position bleibt.

9. Verfahren nach einem der Ansprüche 1 bis 8,
**dadurch gekennzeichnet,**
**dass** der Start des Zufahrens und/oder des Öffnens des Formwerkzeugs in Abhängigkeit von der Position der Schnecke, vom Werkzeuginnendruck, von der Zeit oder vom Spritzdruck ausgelöst wird.

10. Verfahren nach einem der Ansprüche 1 bis 9,
**dadurch gekennzeichnet,**
**dass** das Auffahren des Formwerkzeugs passiv durch die eingespritzte LFT-Schmelze verursacht wird.

11. Verfahren nach Anspruch 10,
**dadurch gekennzeichnet,**
**dass** eine kontrollierte Gegenkraft aufgebracht wird, die das Auffahren des Formwerkzeugs durch die LFT-Schmelze bremst.

12. Verfahren nach einem der Ansprüche 1 bis 11,
**dadurch gekennzeichnet,**
**dass** ein Dekormaterial mit LFT-Schmelze hinterspritzt wird, wobei das Pekormaterial in das geöffnete Formwerkzeug eingelegt und beim Zufahren des Formwerkzeugs vorgeformt wird.

## Claims

1. Method of making long-fibre-reinforced moulded plastic parts (LFT moulded parts) by means of an injection moulding machine, wherein a long-fibre-reinforced melt (LFT melt) is provided and injected into a mould,
**characterised by** the following steps:
(a) closing the mould to the final size of the cavity;
(b) starting to inject the LFT melt and opening the mould until a predefinable compression gap is reached;
(c) continuing injection of the LFT melt;
(d) closing the mould;
(e) allowing the LFT moulded part to cool down;
(f) opening the mould; and
(g) removing the LFT moulded part.

2. Method according to claim 1,
**characterised**
**in that** the injection and opening movement according to step (b) start substantially simultaneously.

3. Method of making long-fibre-reinforced moulded plastic parts (LFT moulded parts) by means of an injection moulding machine, wherein a long-fibre-reinforced melt (LFT melt) is provided and injected into a mould,
**characterised by** the following steps:
(a) closing the mould to the final size of the cavity;
(b) starting to inject the LFT melt at a predefinable position of the mould during the closing movement, before the mould is closed;
(c) continuing the injection and opening of the mould until a predefinable compression gap is reached;
(d) continuing injection of the LFT melt;
(e) closing the mould;
(f) allowing the LFT moulded part to cool down;
(g) opening the mould; and
(h) removing the LFT moulded part.

4. Method according to claim 3,
**characterised**
**in that** the mould is initially closed completely before it is re-opened.

5. Method according to one of claims 1 to 4,
**characterised**
**in that** the closing of the mould starts after the injection of the LFT melt is finished.

6. Method according to one of claims 1 to 4,
**characterised**
**in that** the closing of the mould starts while the injection of the LFT melt is not yet finished.

7. Method according to claim 6,
**characterised**
**in that** the injection of the LFT melt is finished after the mould has been closed.

8. Method according to one of claims 1 to 7,
**characterised**
**in that** when the compression gap is reached, the mould remains in this position for a predefinable amount of time.

9. Method according to one of claims 1 to 8,
**characterised**
**in that** the start of the closing and/or opening of the mould is triggered in dependence on the screw position, cavity pressure, time or injection pressure.

10. Method according to one of claims 1 to 9,
**characterised**
**in that** the opening of the mould is caused passively by the injected LFT melt.

11. Method according to claim 10,
**characterised**
**in that** a controlled counterforce is applied so as to slow down the opening of the mould by the LFT melt.

12. Method according to one of claims 1 to 11,
**characterised**
**in that** a decorative material with LFT melt is back-injected, wherein the decorative material is placed into the open mould and preformed as the mould is closed.

## Revendications

1. Procédé pour fabriquer des pièces moulées plastique renforcées de fibre longue (pièces moulées LFT), sur une machine à mouler par injection, une masse fondue renforcée de fibre longue (masse fondue LFT) étant mise à disposition et injectée dans un outil de moulage,
**caractérisé par** les étapes de procédé suivantes :
(a) fermeture de l'outil de moulage jusqu'à la grandeur définitive de la cavité,
(b) démarrage injection de la masse fondue LFT et ouverture de l'outil de moulage jusqu'à ce qu'une fente d'estampage prédéfinissable soit obtenue,
(c) injection poursuivie de la masse fondue LFT,
(d) fermeture de l'outil de moulage,
(e) refroidissement de la pièce moulée LFT,
(f) ouverture de l'outil de moulage, et
(g) prélèvement de la pièce moulée LFT.

2. Procédé selon la revendication 1,
**caractérisé en ce que**
l'injection et l'ouverture lors de l'étape (b) commencent sensiblement en même temps.

3. Procédé pour fabriquer des pièces moulées plastique renforcées de fibre longue (pièces moulées LFT) sur une machine de moulage par injection, une masse fondue renforcée de fibre longue (masse fondue LFT) étant mise à disposition et injectée dans un outil de moulage,
**caractérisé par** les étapes de procédé suivantes :
(a) ouverture de l'outil de moulage jusqu'à la grandeur définitive de la cavité,
(b) démarrage injection de la masse fondue LFT dans une position prédéfinissable de l'outil de moulage pendant la fermeture avant que l'outil de moulage soit fermé,
(c) poursuite de l'injection et ouverture de l'outil de moulage jusqu'à ce qu'une fente d'estampage prédéfinissable soit obtenue,
(d) injection poursuivie de la masse fondue LFT,
(e) fermeture de l'outil de moulage,
(f) refroidissement de la pièce moulée LFT
(g) ouverture de l'outil de moulage, et
(h) prélèvement de la pièce moulée LFT.

4. Procédé selon la revendication 3,
**caractérisé en ce que**
l'outil de moulage est complètement fermé pour commencer avant qu'il soit à nouveau ouvert.

5. Procédé selon l'une quelconque des revendications 1 à 4,
**caractérisé en ce que**
la fermeture de l'outil de moulage est démarrée une fois que l'injection de la masse fondue LFT est terminée.

6. Procédé selon l'une quelconque des revendications 1 à 4,
**caractérisé en ce que**
la fermeture de l'outil de moulage est démarrée lorsque l'injection de la masse fondue LFT n'est pas encore terminée.

7. Procédé selon la revendication 6,
**caractérisé en ce que**
l'injection de la masse fondue LFT est terminée une fois que l'outil de moulage est fermé.

8. Procédé selon l'une quelconque des revendications 1 à 7,
**caractérisé en ce que**
l'outil de moulage reste un temps prédéfinissable dans cette position lorsque la fente d'estampage est obtenue.

9. Procédé selon l'une quelconque des revendications 1 à 8,
**caractérisé en ce que**
le démarrage de la fermeture et/ou l'ouverture de l'outil de moulage est déclenché en fonction de la position de la vis sans fin, de la pression intérieure d'outil, du temps et/ou de la pression d'injection.

10. Procédé selon l'une quelconque des revendications 1 à 9,
**caractérisé en ce que**
l'ouverture de l'outil de moulage est provoquée passivement par la masse fondue LFT injectée.

11. Procédé selon la revendication 10,
**caractérisé en ce que**
une force antagoniste contrôlée est appliquée, qui freine l'ouverture de l'outil de moulage par la masse fondue LFT.

12. Procédé selon l'une quelconque des revendications 1 à 11,
**caractérisé en ce que**
un matériau de décor est injecté derrière avec de la masse fondue LFT, le matériau de décor étant introduit dans l'outil de moulage ouvert et étant préformé lors de la fermeture de l'outil de moulage.
